# EUROPEAN PATENT SPECIFICATION

(11) **EP 2 993 620 B1**
(45) Date of publication and mention of the grant of the patent: **12.05.2021**
(21) Application number: 15183617.8
(22) Date of filing: 03.09.2015
(51) Int. Cl.: G06K 9/32, G01B 11/00, G06T 7/00, E21B 47/00

(54) **SPATIAL POSITIONING OF OFFSHORE STRUCTURES**
RÄUMLICHE POSITIONIERUNG VON OFFSHORE-STRUKTUREN
POSITIONNEMENT SPATIAL DE STRUCTURES EN HAUTE MER

(30) Priority: 03.09.2014 NL 2013409
(43) Date of publication of application: 09.03.2016
(60) Divisional application: 20217297.9
(73) Proprietor: FNV IP B.V., 2264 SG Leidschendam (NL)
(72) Inventor: Booij, Olaf, 2315 HL Leiden (NL); Schippers, Evert, 2451 ZC Leimuiden (NL); Wouters, Hendrik, 2593 TD Den Haag (NL); Nejadasl, Fatemeh Karimi, 2611 KD Delft (NL); Dias Bispo Carvalho, Diego, 3026 GC Rotterdam (NL)
(74) Representative: Nederlandsch Octrooibureau

(56) References cited:
- BENETAZZO A ED - DEMIRBILEK ZEKI: "Accurate measurement of six Degree Of Freedom small-scale ship motion through analysis of one camera images", OCEAN ENGINEERING, PERGAMON, AMSTERDAM, NL, vol. 38, no. 16, 21 August 2011 (2011-08-21), pages 1755-1762, XP028322423, ISSN: 0029-8018, DOI: 10.1016/J.OCEANENG.2011.08.006 [retrieved on 2011-08-26]
- Paulo Malheiros ET AL: "Real-Time Tracking System for a Moored Oil Tanker: A Kalman Filter Approach" In: "Advances in Sustainable and Competitive Manufacturing Systems", 1 January 2013 (2013-01-01), Springer International Publishing, Heidelberg, XP055171839, ISSN: 2195-4356 ISBN: 978-3-31-900557-7 pages 749-760, DOI: 10.1007/978-3-319-00557-7_62, * §3.1 *
- Xin Li ET AL: "Research on Motion Response of Soft Yoke Mooring FPSO System", Proceedings of the Sixteenth (2006) International Offshore and Polar Engineering Conference, 28 May 2006 (2006-05-28), XP055168516, Retrieved from the Internet: URL:https://www.onepetro.org/download/conf erence-paper/ISOPE-I-06-063?id=conference- paper/ISOPE-I-06-063 [retrieved on 2015-02-09]
- RHINEFRANK K ET AL: "Scaled wave energy device performance evaluation through high resolution wave tank testing", OCEANS 2010, IEEE, PISCATAWAY, NJ, USA, 20 September 2010 (2010-09-20), pages 1-6, XP031832300, ISBN: 978-1-4244-4332-1
- VICKY WONG ET AL: "A combined particle filter and deterministic approach for underwater object localization using markers", OCEANS 2010, IEEE, PISCATAWAY, NJ, USA, 20 September 2010 (2010-09-20), pages 1-10, XP031832317, ISBN: 978-1-4244-4332-1
- ROBERTO RAFFAELI ET AL: "Virtual planning for autonomous inspection of electromechanical products", INTERNATIONAL JOURNAL ON INTERACTIVE DESIGN AND MANUFACTURING (IJIDEM), SPRINGER-VERLAG, PARIS, vol. 6, no. 4, 31 March 2012 (2012-03-31), pages 215-231, XP035132757, ISSN: 1955-2505, DOI: 10.1007/S12008-012-0151-2
- Benjamin L Truskin ET AL: "Vision-based Deck State Estimation for Autonomous Ship-board Landing", , 1 May 2013 (2013-05-01), XP055696146, Retrieved from the Internet: URL:http://citeseerx.ist.psu.edu/viewdoc/d ownload?doi=10.1.1.726.5264&rep=rep1&type= pdf [retrieved on 2020-05-15]
- Benjamin Truskin: "VISION-BASED DECK STATE ESTIMATION FOR AUTONOMOUS SHIP-BOARD LANDING", , 1 May 2013 (2013-05-01), XP055738019, Retrieved from the Internet: URL:https://etda.libraries.psu.edu/files/f inal_submissions/8514 [retrieved on 2020-10-08]

## Description

### TECHNICAL FIELD

The present invention relates to systems for determining the position of an object in 3D space and more particularly to such a system that can be used for the spatial positioning of offshore structures. The invention also relates to methods of positioning of objects and structures from a moving reference frame.

### BACKGROUND ART

In various situations, a need may exist for determining the position of an object in 3D space. This requires the position of the object to be determined with six degrees of freedom, namely x-y-z co-ordinates and pitch-roll-yaw angular positions. The position may be determined in a local reference frame or in the Earth's reference frame, depending on the requirements of the situation. In the following, reference will be made to positioning within the Earth's geodetic reference frame unless otherwise stated, although the invention is equally applicable to any chosen reference frame.

Existing positioning systems are employed in robotic processes, space technology, surveying and the like. One system disclosed in US8798794 enables precise robotic positioning of an object having optically detectable features by means of a 3D image recording device.

In the offshore construction industries, positioning can be problematic for various reasons. In particular, surveying from a moving vessel means that a fixed datum level is not available. Determining the Z (vertical) co-ordinate is difficult due to tides, vessel ballast and waves, and the rolling or pitching motion of a vessel can lead to large angular movements. Furthermore, since the offshore location may be remote, satellite positioning may be less accurate or reliable than at onshore locations.

One situation where accurate positioning of structures is required is during the installation of offshore platforms. Such platforms generally comprise a jacket and a topside supported by the jacket. Topsides range from simple small decks for supporting personnel and equipment to complete multi-storey oil and gas platforms. Before the jacket is secured to the sea floor, it must be positioned at the desired site. A jacket's desired installation position and heading is pre-determined prior to placement by a range of factors. Prevailing wind or water current direction may dictate a best heading to minimise structural loading. Likewise, a jacket location may be dictated by the requirement to drill into pre-determined subsea reserves or the need to connect a jacket to existing surface or subsea infrastructure.

Currently, methods for jacket placement rely on a pod of instruments installed on top of the jacket, including one or more Global Navigation Satellite System (GNSS) receivers, a gyrocompass, an inertial monitoring unit (IMU) and associated telemetry equipment. This technique generally requires access to the jacket by personnel in a man basket to install or remove the instruments. In addition, the jacket must often be equipped with additional temporary gangways for the safe movement of personnel for equipment installation or removal. This procedure typically requires at least two surveyors. These current techniques are costly, and subject personnel to increased risk of injury. After installation, much of this equipment must be removed, requiring still further operations.

Conventional surveying techniques used during placement of onshore engineering structures may use theodolites and laser ranging instruments. Such instruments and techniques are however not adapted for use offshore where the dynamic nature of the situation makes accurate readings difficult or impossible.

It would be desirable to provide an improved system and method for structure positioning from a moving reference frame that at least partially alleviates some of these disadvantages.
A. Benetazzo, "Accurate measurement of six Degree Of Freedom small-scale ship motion through analysis of one camera images", Ocean Engineering 38 (2011) p. 1755 -1762, discloses a six Degree Of Freedom (6D0F) motion measurement technique for small-scale physical models of floating bodies, based on analysis of image sequences from one camera. The proposed system consists of one camera and one marker. The known method estimates the 3-D rigid motion following the time evolution of the target of the known marker pattern fixed to the moving body and framed by the camera. The marker as shown and discussed has a chess board pattern.
B. L. Truskin, "Vision-based deck state estimation for autonomous ship-board landing" discloses autonomous ship-board landing by e.g. helicopters, where the ship is floating on sea with severe sea conditions. The system uses a monocular camera, an inertial measurement unit and GPS. The ship is provided with landmark bearings. Its goal is to estimate deck state, i.e. its position, attitude, velocity and angular velocity. The system is able to sense where the landmarks are located on the deck, to perceive their position in a visual frame, estimate the deck state, plan a path to land, and control the aircraft to follow that path.

### SUMMARY OF INVENTION

The invention relates to a method and a system as defined in the attached independent claims. The system determines the position of an offshore structure in a fixed reference frame by observations from a moving reference frame, the system comprising a plurality of markers located at defined positions on the structure; an imaging device, arranged to view the markers and generate image data representative of the relative positions of the markers in the moving reference frame; a local positioning system, arranged to determine the position of the imaging device in the fixed reference frame and generate position data; a processing unit, arranged to receive the image data from the imaging device and the position data from the inertial positioning system and compute the position of the structure based on the defined positions of the markers.

Such a computer-vision based system allows the determination of the position of the structure without the requirement of actually engaging or otherwise physically interacting with the structure. For the offshore placement of large engineering structures, this greatly reduces the exposure of personnel to risk of injury and equipment to risk of damage. In the following, reference to position, unless otherwise stated, is intended to refer to 3-D position, including both x-y-z position and attitude or orientation (pitch, roll, and heading). The structure itself may be stationary i.e. with respect to the fixed reference frame or quasi-stationary i.e. moving relatively slowly compared to the imaging device.

The local positioning system may be any suitable system that can determine the instantaneous position of the imaging device. This may be provided by a positioning system of a vessel on which the imaging device is installed or may be a positioning device dedicated to the imaging device. It may also be a combination of systems, which together provide the necessary six degrees of freedom measurements for the imaging device. In one embodiment, the local positioning system may comprise an IMU integrated with the imaging device as a portable survey unit. In this case, the IMU and the imaging device should be rigidly mechanically aligned to each other. The system or survey unit may also incorporate a calibration function to calibrate the local positioning system to the imaging device. When using the system for extended periods or in the event that the survey unit has been subject to shock, it may be desirable to have a simple self-test capability. This may be achieved by calibrating against the horizon, which, for offshore locations, provides an accurate horizontal reference. The calibration function may be partially local and partially remote e.g. with an image processing system being used to identify the horizon.

In a particular configuration, the system may comprise both a vessel's navigation equipment and a local IMU directly engaged with the imaging unit, with the local IMU providing only pitch and roll data and the vessel's navigation equipment providing x-y-z and heading data. In general, reliable and accurate heading data may only be available from expensive and complex equipment of the type that may already be present on board a survey vessel. Pitch and roll data may be provided to relatively high accuracy by less complex and costly equipment such as magnetometers. Integrating pitch and roll measurements with the imaging device can also avoid inaccuracy due to flexure or torsion of the vessel.

The term local positioning system is not intended to be restrictive on any particular principle of operation. In particular, the local positioning system may be based on technologies or techniques including: mechanical gyroscopes; fibre optic gyroscopes (FOG); laser ring gyroscopes (LRG); micro-electro-mechanical systems (MEMS) based technologies; accelerometers; magnetometers; pendulums; electrolytic inclinometers; liquid capacitive inclinometers or any combination of the above. The local IMU should preferably have a dynamic accuracy of better than 0.1°, more preferably better than 0.05° and most preferably better than 0.02°, in the pitch and roll directions. Preferably the local positioning system should be able to deliver pitch, roll and heading data at a frequency of at least 5 Hz and preferably at 20 Hz or above.

According to a further aspect of the invention, the system further comprises a clock arranged to time stamp the image data relative to the position data. To effectively process the image data and the position data, there must be close correlation in time between the respective measurements. For operation aboard a moving vessel, pitch and roll may change very rapidly and the position data should preferably be time stamped to an accuracy of at least 10 ms. Most preferably, the time stamp will be accurate to at least 1 ms. The required timing accuracy, including unaccounted processing and communication latencies, may be expressed as a function of the required measurement precision and the expected rate of change of the moving frame. For example aboard a vessel, it may be desirable that the timing accuracy should be better than the required pitch and roll measurement accuracy divided by the maximum expected angular rate of the vessel. The difference between capture time and transmission time may also need to be taken into account to ensure the data items are correctly associated. The clock may be a local clock applicable to the local positioning system and the imaging device. Most preferably, the clock is linked to a global timebase such as GNSS to allow readings to be correlated with other events such as a position measurement. Preferably the clock also issues a clock signal for synchronising the capture time of image data. The skilled person will be well aware of various options for ensuring image data and position data are accurately synchronised to such a clock signal.

The markers may be of any form suitable for achieving the desired position accuracy and may be adapted in number and position to specifically suit the structure to be positioned and the manner in which it is viewed. Markers may, in certain cases, be provided by parts of the structure itself. Preferably however, at least one of the markers is removably affixed to the structure for the purpose of the position determination. This means that the marker can be removed after position determination is completed. For certain structures, the presence of markers after installation may be detrimental for various reasons, including aesthetic, safety, maintenance and weathering.

In general, at least four markers are provided on the structure, rendering three vector values for subsequent analysis. Preferably, more markers will be made available to provide redundancy in cases where one or more of the markers may be obscured, or in order to check for the possible movement of a marker. The positioning of the markers is important to achieve optimised results. In particular, it may be desirable for offshore operation on engineering structures, that at least two markers are located more than 3 metres apart. In general, greater distances between markers allows more accurate position determination from greater distances. Preferably, the markers will be located at extremities of the structure where possible. Also, for open structures i.e. where it is possible to view through the structure, it is desirable to provide markers on a front-side of the structure and on a rear-side of the structure visible from the front-side.

The markers may be simple visual markers such as a dot or a cross, which allow the accurate position of the marker to be robustly identified. Markers may also be more complex to allow additional information to be conveyed. It will be understood that a marker that includes additional image data such as scale or direction can assist the processing unit to compute the position of the structure. As a result, either fewer markers may be required or greater redundancy may be achieved. Preferably, at least one of the markers is a unique marker and the system is arranged to automatically identify the unique marker. It will be understood that all of the markers required to provide a determination of position may be unique markers. The markers may be affixed to the structure in advance and their positions relative to the structure determined by surveying techniques. During position determination of the structure, the first step may be to identify which marker is which. Automatic identification of unique markers by the system simplifies this process. In an alternative arrangement, an operator may be able to manually identify the respective markers to the processing unit.

At least one of the markers may be a trackable marker and the system may be arranged to automatically track the marker. In another embodiment, all of the markers may be trackable. For highly dynamic systems, automatic tracking of the marker or markers is advantageous. Tracking may be facilitated by knowing the geometry of the markers which are determined by surveying during marker installation and prior to jacket placement. If the system has "lost" a marker, with knowledge of the geometry of the markers, the system can determine where to look for the "lost" marker based on the position of "found" markers. Additionally, trackable markers eliminate the need for the operator to indicate the location of markers to the system. In this way the system may regularly provide updates to the determined position of the structure. The system may thus provide real-time position information for the structure. The markers may be high contrast images to facilitate automatic recognition, identification and trackability. High contrast images improve visibility of the markers. In one embodiment, each quadrant marker is a circular, black/white marker.

The system may comprise a display, operatively connected to the processing unit and the processing unit may be arranged to display a representation of the position of the structure on the display. The display may be located at the processing unit or remotely. In one configuration the representation of the position may be overlaid onto a representation of a desired position of the structure. This allows a surveyor or crane operator to easily perceive the difference between the desired and the actual position of the structure and direct further action. In a still further embodiment the imaging device is located at a first location and the display is located at a second location and the representation of the position of the structure on the display is a representation as viewed from the second location. A number of displays may be provided at different locations. In that case, each display may depict the structure in a manner appropriate to the location of the display.

It will be further understood that various imaging devices may provide the desired function. These may include laser imaging devices, infra-red imaging or conventional camera based imaging devices. In one embodiment, the imaging device is a camera having automatic iris control, allowing use in varying lighting conditions. It will be understood that, throughout the day, the position of the sun will vary and it may be undesirable to re-locate the imaging device when the lighting condition from a particular imaging device locations prevents the acquisition of useful images. Automatic lighting control can mitigate this difficulty, allowing the operator to continue measurements using an imaging device at the same location. Additional desirable characteristics of the camera include anti-smearing and anti-blooming correction to further improve image quality. The imaging device is most preferably a calibrated camera in which the camera image frame is calibrated and known with respect to reality such that measurement of a vector made within the image frame can be converted into a true representation of the vector in reality. Such calibrated cameras may also be referred to as photogrammetry cameras. Preferably, sensor distortion is known, as well as lens distortion. Furthermore, filter distortion should be known. In this way these distortions may be compensated for in the system, either on generation of the image data or on processing of the image data in the processing unit. In one embodiment, the camera should have a trigger input allowing external control of the timing of taking an image as will be further explained below.

In one embodiment of the invention the imaging device is mounted onboard a vessel. The vessel may be a heavy lift vessel from which the structure is being positioned. In the case of a heavy lift vessel, the imaging device may be directed downwardly towards the intended location of the structure. Alternatively, the vessel may be an auxiliary vessel deployed specifically for the purpose of surveying the structure. As indicated above, in the case of mounting onboard a vessel, the local positioning system may comprise the local positioning system or navigation equipment of the vessel. In this case, the position of the imaging device within the reference frame of the vessel must be determined, e.g. by surveying prior to commencing operation. Further calibration facilities may be provided to check the accuracy of placement of the imaging device with respect to the vessel during use. This may comprise a portion of the vessel or other datum point fixed with respect to the vessel and located within a field of view of the imaging device.

In another embodiment, the imaging device may be mounted on an unmanned vehicle such as a drone vessel or an unmanned aerial vehicle (UAV). A wireless or wired communication link between the imaging device and the processing unit may be provided whereby image data and position data is sent over the link to the processing unit. In addition, control signals from the processing unit may be sent to the imaging device. Control signals may include a power on or wake-up signal.

The present invention makes possible the precise position determination of a structure from a remote location using a single imaging device. It will however be understood that the invention is not limited to a single imaging device and that further accuracy and redundancy may be achieved by providing at least two imaging devices arranged to view the structure from different perspectives. Improved accuracy may be achieved by directing first and second imaging devices to view the structure from angles generally perpendicular to each other. The first and second imaging devices may view one or more of the same markers. Alternatively, they may each view different markers. It will be understood that the positioning of the markers will generally be dependent upon whether they are to be viewed from a single location or from different locations, by one or more imaging devices. The first and second imaging devices may be located in the same moving frame of reference e.g. installed aboard the same vessel, or may be located in different frames e.g. aboard different vessels.

In one particular embodiment, the structure is an offshore jacket to be secured by piles driven into the seabed. As a result of the proposed invention, it is not necessary for personnel to board the jacket during placement to install or remove measuring instruments. The open structure of such jackets also facilitates viewing from the same direction, markers placed at both the front and backsides of the jacket.

The invention also relates to a method of determining the position of an offshore structure in a fixed reference frame by observations from a moving reference frame, the structure comprising a plurality of markers positioned on the structure, the method comprising: determining the positions of the plurality of markers with respect to a reference frame of the structure; viewing the structure with an imaging device from a moving reference frame to generate image data representative of the relative positions of the markers in the moving frame; determining a position of the imaging device in the fixed frame of reference and generating position data; and processing the image data and the position data to compute the position of the structure based on the predetermined positions of the markers.

The method comprises affixing a plurality of markers to the structure and surveying the structure to determine the positions of the markers in the reference frame of the structure prior to viewing the structure from the moving reference frame. The surveying of the structure may take place on land. In the case of an offshore jacket constructed on land, this may take prior to placement offshore. After construction is complete, a surveyor may attach machine vision markers to the jacket structure. The markers are generally installed above the splash line as the markers must remain visible during placement. During surveying, the distances between markers are accurately measured. In this way, the geometry of the jacket with respect to its markers is known. This information is recorded and stored for later use in the system during jacket placement. Although surveying on land may be preferable, it will be understood that surveying onboard a barge or other vessel is also possible. In any case, surveying within a single reference frame, be it moving or fixed, is generally achievable using conventional measuring techniques.

As mentioned above, in one embodiment the markers are removable. Offshore jackets are subjected to harsh and hazardous environments. Such jackets are generally treated with anti-corrosion and fire protection coatings. A non-removable target may damage these coatings. The markers may, for example, be applied to thin metal or plastic sheets secured to jacket frame sections using a connection clamp. Jacket frame sections are generally cylindrical and have a diameter of about 0.5 to 1 metre. The dimensions of the jacket are application dependent but above waterline lengths of 10 metres to 50 metres or more are typical. The method may further include the removal of the markers subsequent to installation.

In another embodiment, the method may comprise accessing an electronic file or other form of computer representation of the jacket which accurately describes the dimensions and mechanical configuration of the jacket. This may be used for positioning of virtual markers on the structure corresponding to structural members or parts thereof, which can be identified both visually on viewing the structure with the imaging device and in the electronic file. Identification may take place automatically by software or may be guided by a human operator. The method may thus take place without fixing of physical markers to the structure or with a mixture of physical and virtual markers.

In one embodiment of the method, the imaging device provides an image of the jacket during placement. The operator or surveyor receives an image from the imaging device on a display. The surveyor manually clicks on the display using a conventional pointer device, indicating to the system that a marker is in that area of the image. In an embodiment where the markers are not unique, the surveyor can also identify the marker to the system. For example, the surveyor clicks on a marker and identifies it as "top left." This identification relates to the surveyed geometry of the jacket. Once all markers have been identified, the system can determine the position of the jacket with respect to the camera. In turn the position of the camera is known with respect to the vessel, and the vessel's position is known with respect to the Earth. In this way the position of the jacket can be determined with respect to the Earth.

Accordingly, the position of the jacket can be continuously monitored in real time. This is especially advantageous as regularly updating the determined position of the jacket allows the installation crew to take corrective action. For example, the crane operator or crew may perform adjustments to change the position of the jacket using the crane hook, taglines or tugger winches. The position of the jacket must be correct before securing the jacket with piles to the sea floor. While driving the piles into the sea floor it is generally no longer possible to take further corrective action.

The invention further provides a computer program product comprising instructions to perform the method described above and hereinafter when installed on a computer or processing device.

The computer program product may comprise appropriate modules to perform the above defined tasks including, but not limited to: an image acquisition software module for acquiring time-stamped image data; a position software module for acquiring time-stamped position data; a marker identification module for identifying individual markers within the image; a marker tracking module for actively tracking an identified marker; an image reconstruction module for transforming the image from the moving frame into the fixed frame of reference; and a GUI module that presents a display of the structure in the fixed frame of reference.

In one embodiment, the GUI module may be arranged to cause the display of the structure to be overlaid onto a desired position of the structure.

In another embodiment, the computer program product may further comprise a model importation module to import a computer representation of the jacket; and a structure recognition module which detects structure within the image data based on the computer representation imported by the model importation module.

It will be appreciated that the present invention is not limited to jacket placement and that the system and method are applicable to other structures used in offshore applications, including but not limited to wind turbines, drilling platforms, bridges, pipelines and the like and parts thereof. Furthermore, although the invention is particularly applicable to offshore spatial positioning on a moving platform, it is not excluded that the same technique may be applied in other situations onshore, particularly where the location of survey equipment is difficult to establish accurately.

### BRIEF DESCRIPTION OF DRAWINGS

The features and advantages of the invention will be appreciated upon reference to the following drawings of a number of exemplary embodiments, in which:
Figure 1 shows a perspective overview of a positioning system according to a first embodiment of the invention;
Figure 2 shows a detail of part of the jacket of Figure 1;
Figure 3 shows schematically the architecture of the system of Figure 1;
Figure 4 shows a depiction of image data displayed on the display of Figure 3;
Figure 5 shows a depiction of the jacket of Figure 1 on the display of Figure 3;
Figure 6 shows a schematic view of part of a second embodiment of the system; and
Figure 7 shows a perspective overview of a positioning system according to a third embodiment of the invention.

### DESCRIPTION OF ILLUSTRATIVE EMBODIMENTS

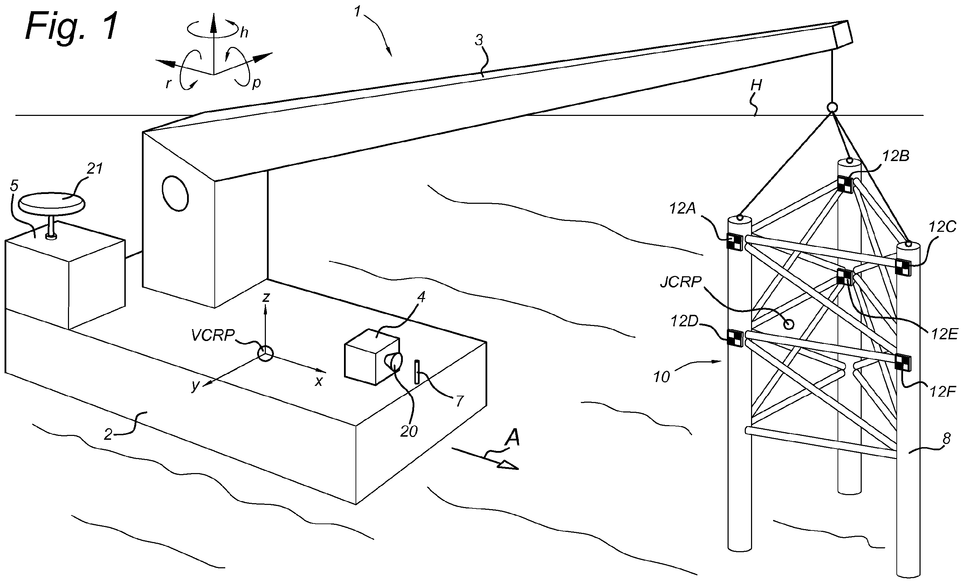

Figure 1 shows a schematic view of a positioning system 1 according to a first embodiment of the invention. The system 1 is to be used for determining the position of a structure, which in this embodiment is a jacket 10 for installation offshore. In Figure 1, the jacket 10 has been provided with a number of markers 12A-F, affixed to its legs 8 and calibrated with respect to a Jacket Common Reference Point JCRP in an onshore survey operation prior to shipping. The positioning system 1 is mounted onboard a heavy lift vessel 2 having a crane 3 and comprises a survey unit 4 having a camera 20 and vessel navigation equipment 5 including a geodetic grade GNSS antenna 21. Also shown in Figure 1 is a datum point 7 located within a field of view of camera 20. The datum point 7 may be located on any convenient immovable part of the vessel 2, such as a railing or the like. The vessel navigation equipment 5 is adapted to provide cm accurate x-y-z positioning and pitch-roll-heading data with dynamic accuracy of better than 0.5°, at least in the pitch and roll directions. The survey unit 4 is positioned on the vessel 2 at a known position with respect to the Vessel Common Reference Point VCRP and calibrated prior to use in order to determine accurately the direction A in which the camera 20 is pointing. Once calibrated, the position of the datum point 7 within the field of view of the camera 20 can be observed to ensure no further changes have occurred. The survey unit 4 can also be calibrated against the horizon H. Although in Figure 1 a single survey unit 4 is shown, it will be understood that a number of similar survey units 4 may be mounted at different locations on the vessel 2, directed towards the jacket 10.

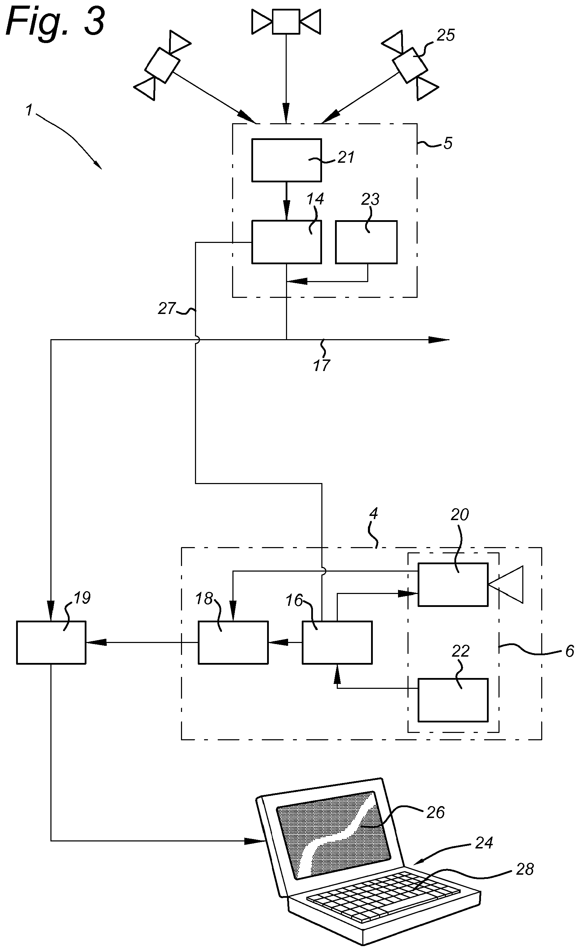

Figure 3 shows a schematic overview of the positioning system 1 showing the components in further detail. As can be seen, the survey unit 4 comprises, a local signal multiplexer 16, a local Ethernet switch 18, camera 20 and local IMU 22. The survey unit 4 comprises a frame 6 to which the camera 20 and the local IMU 22 are rigidly attached. The relative positions of these components are thus fixed with respect to each other. Once calibrated, the values can be used elsewhere in the system. In general the camera 20 and local IMU 22 will be factory calibrated together but it is not excluded that further calibration and checking can take place onboard the vessel 2 during installation and use of the system 1.

The vessel navigation equipment 5 includes the geodetic grade GNSS antenna 21, GNSS receiver 14 and vessel IMU \ Gyrocompass 23. The GNSS receiver 14 is arranged to receive positioning signals and correction data from satellite constellation 25 and generates vessel x-y-z co-ordinate data to centimetre accuracy. It also generates a pulse per second (PPS) clock signal 27 based on the GNSS signal, accurate to 1 mS. The vessel IMU will generally be a precision FOG, installed for the purpose of accurate survey and installation work and having, in conjunction with the further vessel navigation equipment 5, an accuracy of 0.5 degrees in the heading direction.

The positioning system 1 further includes a processing unit 24 having a display 26 and operator input 28 in the form of a conventional keyboard and pointer. The processing unit 24 is in this case a standard laptop computer located onboard the vessel and used by the surveyor. It will however be understood that it may also be a distributed processing arrangement with processing taking place at different locations. The display may also be remote from the processing capability. The processing unit 24 is connected to receive signals from the vessel navigation equipment 5 and the survey unit 4 via vessel Ethernet switch 19 and vessel network 17, to which other onboard equipment may be connected. It will be understood that although hard-wired connections have been shown, wireless signal transmission may equally be provided for some or all of the connections.

The positioning system 1 may comprise generally conventional components, interfaced together physically and electronically as will be further described below in order to achieve the desired functionality. In particular, the local signal multiplexer 16 is a FUGRO Starport™ multiplexer \ data concentrator \ terminal server, employed to trigger the camera 20 at a desired rate to perform image capture and to time stamp the multiplexed data from the local IMU 22 and the camera 20. The Ethernet switches 18 and 19 are typically Gigabit switches capable of operating at 1000 Mbits/s though slower speed operation is supported. The camera 20 is a high resolution digital camera operating according to GigE vision protocol and having automatic iris control and anti-smearing and anti-blooming correction. This allows it to compensate for changing light conditions. The camera 20 is also triggerable, having a trigger port allowing it to be triggered by an appropriate trigger signal from the local signal multiplexer 16. Camera 20 also has an Ethernet connection to the local Ethernet switch 18. The local IMU 22 is a MEMS based IMU having dynamic accuracy of better than 0.05° in the pitch and roll directions. The local IMU 22 provides serial data to the local signal multiplexer 16.

Operation of the positioning system 1 will now be described with reference to Figures 1 to 3. Accordingly, in a preliminary phase, the jacket 10 with the markers 12 affixed at appropriate locations is surveyed while on land in order to determine the precise locations of the markers 12 with respect to the jacket geometry, in particular with respect to the Jacket Common Reference Point JCRP. In this context it may be noted that there are shown a total of six markers 12A-F located on the three legs 8 of the jacket. The placement of the markers 12 has been chosen to ensure all are visible from viewing direction A and also that they provide the maximum possible spread of readings when viewed from this direction. The rearmost markers 12B, 12E are positioned to be visible through the open structure of the jacket 10 from this intended viewing direction. The positions of the lowermost markers 12D, 12E and 12F are calculated to ensure that they remain above the highest expected water level during placement. Initial surveying of the jacket 10 and markers 12 can take place using any conventional surveying equipment and may also be based on the project's engineering drawings.

In a second stage of the operation (which may take place at a time and place far removed from the preliminary phase), the jacket 10 is placed at its intended location by lowering from the vessel 2. Initial coarse positioning of the jacket 10 may take place by any appropriate means. Once the jacket 10 approaches its desired placement position, the positioning system 1 is implemented to determine precisely the momentary position of the jacket 10. To this end, the camera 20 is operated to produce an image of the jacket 10 from the direction A. For the avoidance of doubt, the direction A merely indicates a general direction of viewing, which will change during motion of the vessel 2 and jacket 10 and is not otherwise important for the following discussion.

Once operation commences, local IMU 22 generates a serial datastream of pitch-roll data for the local orientation of the survey unit 4 at a frequency of around 10 Hz. The pitch-roll data is produced asynchronously and delivered to the local signal multiplexer 16, which accurately timestamps it based on the PPS clock signal 27 and delivers it to the network 17 via the Ethernet switch 18. The local signal multiplexer 16 also generates trigger signals to camera 20, triggering the capture of images of the jacket 10 with the markers 12A to 12F at a chosen frequency. For the present purpose, a rate of 3 Hz has been found suitable. The trigger signals to the camera 20 are also read by the local signal multiplexer 16 and precisely time-stamped. This time-stamped event defines the precise moment of capture of the next packet of image data which is transmitted from the camera 20 to the network 17 via the local Ethernet switch 18. Simultaneously, the GNSS receiver 14 receives position and timing data, and position aiding data from satellites 25, allowing the precise position of the GNSS antenna 21 to be determined. It can then compute the x-y-z position of the vessel 2 based on the geometry of the vessel 2 and the position of the GNSS antenna 21 with respect to the Vessel Common Reference Point VCRP. This x-y-z position data and heading data determined by the vessel IMU 23 is also put onto the network 17 and received by the processing unit 24. In general the GNSS receiver 14 delivers position data at a frequency of 10-20 Hz, while the vessel IMU delivers data at a rate of 50Hz or above. Given that the location of the survey unit 4 with respect to the Vessel Common Reference Point VCRP has been previously calibrated, the position of the camera 20 can thus also be determined. Since all readings and data are time-stamped to the same clock signal, the processing unit 24 can correlate the readings, either by interpolation between signals or otherwise. The position data determining the position of the camera 20 at the moment an image is produced is thus associated with the respective image data.

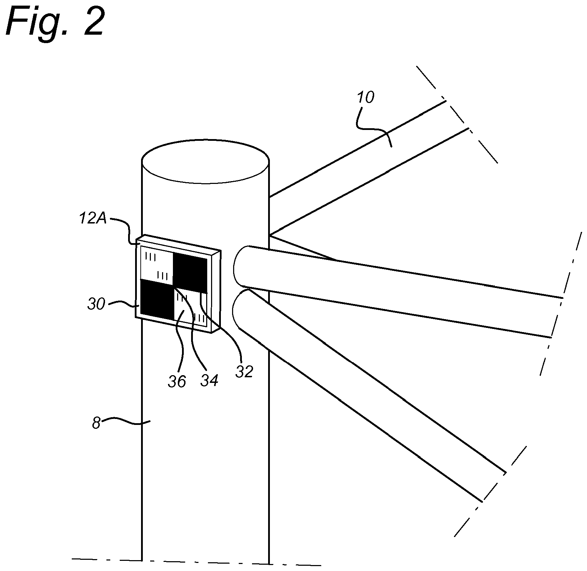

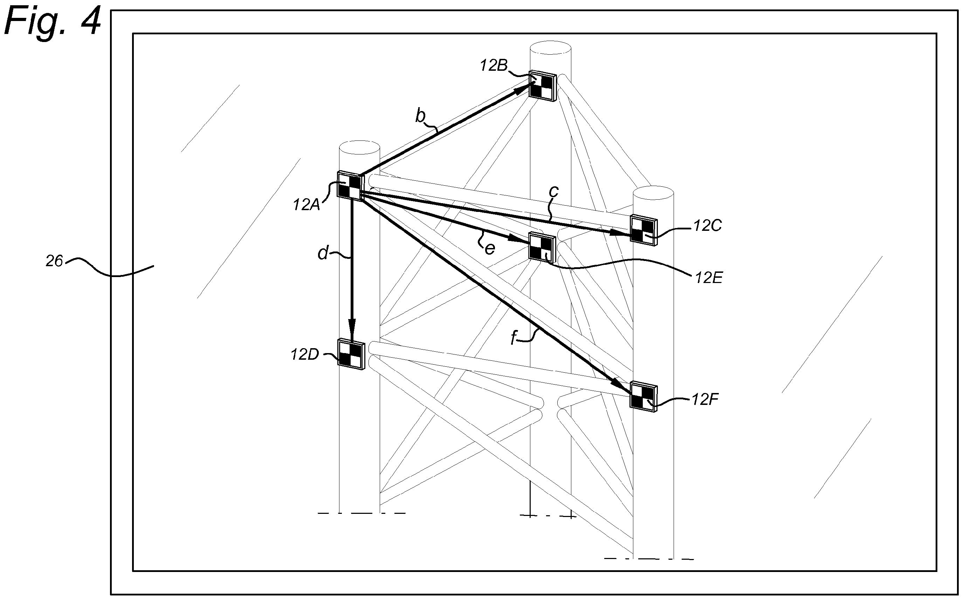

Figure 4 shows a depiction of the image data displayed on the display 26. The processing unit 24 runs software including a marker identification module, which automatically identifies the individual markers 12 within the image, based on their unique codes 36 (see Figure 2). It will be understood that such a module is optional and that manual identification of the markers 12 can also be implemented e.g. by an operator using the operator input 28 to mark and identify each marker 12 individually. Such operator input 28 may also be used to assist the automatic identification in cases of ambiguity. Identification of the markers 12 allows generation of appropriate vector representations *b-f.* By evaluating the image data with respect to the predefined survey data, the processing unit 24 can determine the relative positions of the markers 12 with respect to the moving frame of the camera 20. Once this is evaluated, the position of the jacket 10 can be converted into the fixed reference frame i.e. the Earth's geodetic reference frame, based on the camera position and the position data corresponding in time to the moment at which the image is taken.

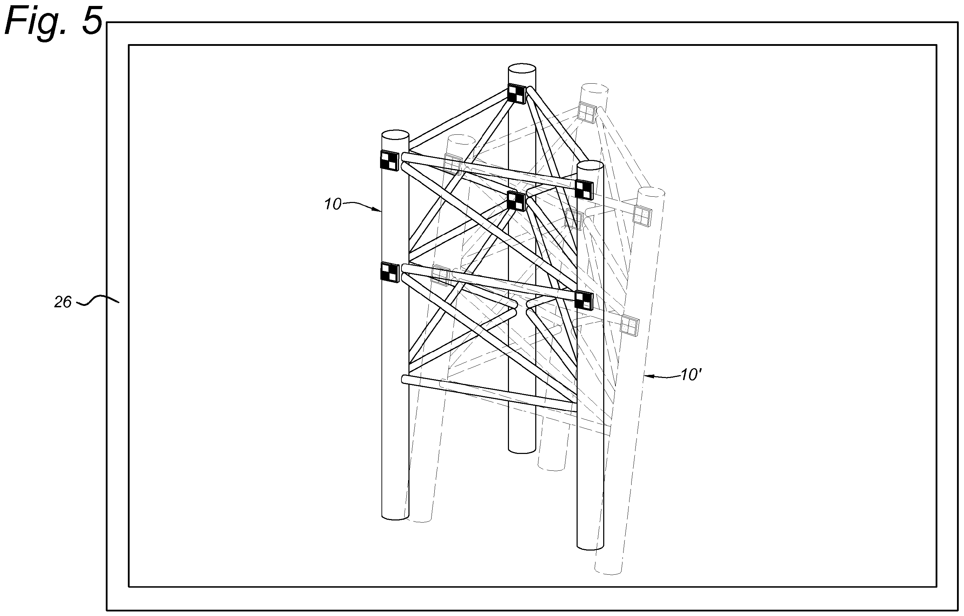

Figure 5 shows a depiction of the jacket 10 in the fixed frame of reference i.e. the real-time position of the jacket 10 overlaid onto a depiction of the desired position of the jacket, which in this view is shown in broken lines as jacket 10'. It is noted that although only the upper portion of the jacket can be seen by the camera, the display 26 shows the whole jacket 10 including the bottoms of the legs 8. This assists a crane operator in determining how far the bottom of a leg 8 must be moved to approach the desired position.

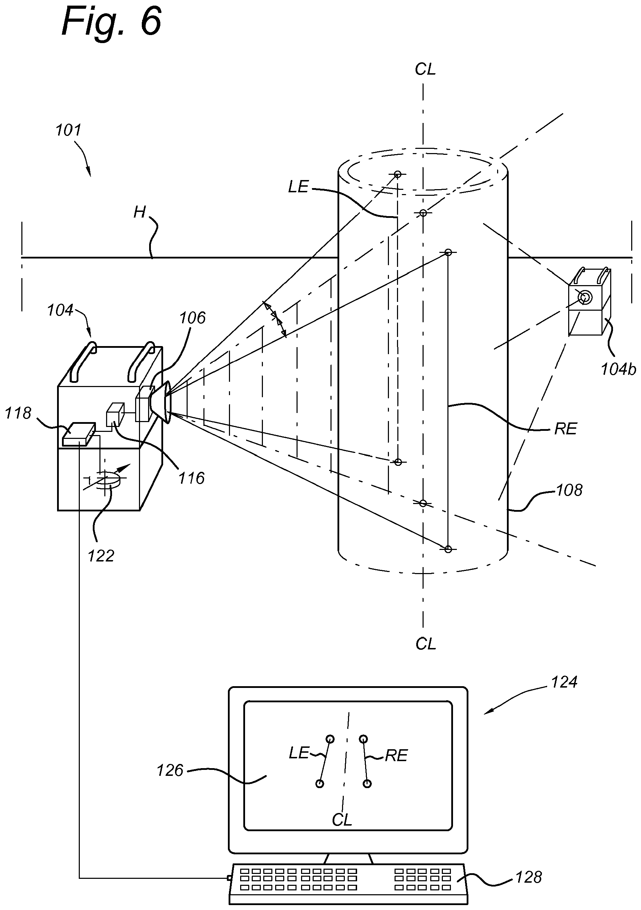

A second embodiment of the invention is shown in Figure 6 in which like features to the first embodiment are provided with like reference numerals preceded by 100. The positioning system 101 of Figure 6 comprises a survey unit 104 substantially the same as that of Figure 1 including signal multiplexer 116, Ethernet switch 118, camera 120 and IMU 122. The survey unit 104 is connected through the Ethernet switch 118 to processing unit 124 having display 126 and operator input 128. Details of the vessel navigation equipment are not shown in this view but it will be understood that this functions in the same manner as described in relation to Figure 3 above.

In Figure 6, the camera is shown in use during viewing of a jacket leg 108 having a centre line CL. According to the second embodiment of the invention, the processing unit 124 is provided with an additional structural recognition module that operates to identify tubular structural members such as legs 108. The software module identifies the boundaries of the leg and applies software markers LE and LR to the left edge and the right edge respectively of the leg 108. This may be done automatically or with the assistance of manual pointers as in the first embodiment. These markers LE, RE are displayed on the display 126 and the structural recognition module then calculates a plane through the centre-line CL of the leg 108. This information can be calculated for all of the legs of a jacket or similar structure and can provide additional information to the positioning system 101 whereby the desired accuracy may be achieved with fewer applied markers. It will be understood that while the above has been explained in relation to the legs, other cylindrical and non-cylindrical structural members can be marked and the positioning of the structure can be undertaken relying only on these markers if desired. Also shown in Figure 6 is a second survey unit 104B, which may be provided for viewing the leg 108 at an angle to the first survey unit 104. This enables certain image ambiguities to be resolved without resort to externally applied markers.

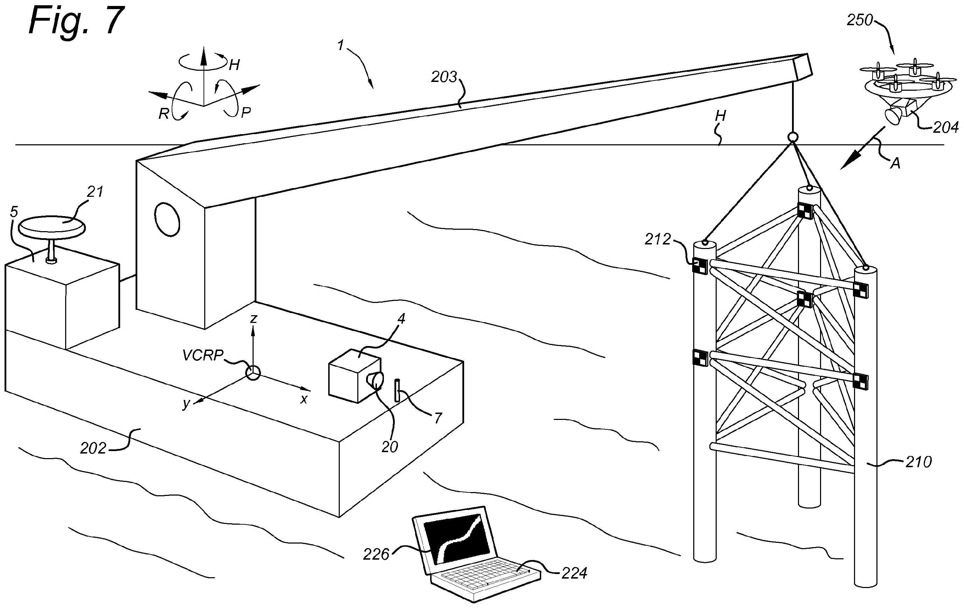

Figure 7 shows a third embodiment of the invention in which an additional survey unit 204 is mounted on an aerial drone 250. The survey unit 204 may be otherwise similar to that of Figure 1 except for the fact that in this case, all of the capabilities of the vessel navigation equipment are provided on the survey unit 204 or otherwise integrated onboard the drone 250 in order to be able to determine the local position (with six degrees of freedom) of the drone 250 and the viewing direction A. The drone 250 can move the survey unit 204 to view the jacket 210 from different viewing directions A. In this case, markers 212 may require affixing at different locations to support the different viewing directions. In the case of Figure 7, the survey unit 204 is provided with wireless connection to the processing unit 224 onboard the vessel 202. It may also work together with a survey unit 4 onboard the vessel 202. In this case too, irrespective of the direction of viewing A, the display 226 provides the operator with an image of the jacket 210 from the perspective of the vessel 202 such that the crane operator can immediately determine how to adjust the position as required to reach the final placement.

Thus, the invention has been described by reference to certain embodiments discussed above. It will be recognized that these embodiments are susceptible to various modifications and alternative forms well known to those of skill in the art without departing from the scope of the invention.

## Claims

1. A method of determining in real time a position with six degrees of freedom of an offshore structure (10), for example an offshore jacket, while the structure is being placed at a predetermined installation position with six degrees of freedom on a seafloor or on an existing subsea infrastructure using a crane (3) on a vessel (2), the position of the structure being determined in a fixed frame of reference, for example the Earth's reference frame, by observations of the structure from a moving frame of reference, the structure comprising a plurality of markers (12) positioned on the structure such that they are visible from a viewing direction and provide position information of the structure with six degrees of freedom by viewing said markers, the method comprising:
- initially surveying the structure, for instance on land, including determining the positions of the plurality of markers with respect to a reference frame of the structure and storing survey information as to the determined positions of the markers in relation to the geometry of the structure;
- after surveying, and during lowering and placing the structure (10) on said predetermined installation position by the crane (3):
- viewing the structure with an imaging device (20) from the moving reference frame, to generate image data representative of the relative marker positions of the markers in the moving reference frame;
- determining an instantaneous position with six degrees of freedom of the imaging device in the fixed reference frame and generating imaging device position data synchronized with said image data, and
- processing the synchronized image data and the imaging device position data to compute the position of the offshore structure in the fixed reference frame with six degrees of freedom by using said survey information as to the determined positions of the markers, as well as the marker positions of the markers as derived from the image data, and the imaging device position data.

2. The method of claim 1, further comprising affixing the plurality of markers (12A-12F) to the structure (10) and surveying the structure to determine and store the positions of the markers in the reference frame of the structure prior to viewing the structure from the moving reference frame.

3. The method of claim 1 or 2, wherein the imaging device (20) is part of a survey unit (4) that includes an integrated inertial monitoring unit, IMU, (22), and wherein determining an instantaneous position of the imaging device (20) in the fixed reference frame takes place with use of the IMU

4. The method according to any of claims 1 to 3, further comprising
correlating the measurement times for the generated image data and the imaging device position data, involving issuing clock signals to synchronise capture triggering times for the image data and the position data, and/or involving timestamping the image data and the imaging device position data to a same clock signal with an accuracy of, preferably, at least 10 ms, more preferably at least 1 ms;
said clock signals being, preferably, linked to a GNSS timebase.

5. The method according to any one of claims 1-4, comprising:
- accessing an electronic file or other computer representation of the structure (10), which describes the dimensions and mechanical configuration of the structure;
- identifying structural members or parts of the structure, by visual inspection of the offshore structure with the imaging device and in the electronic file, and
- positioning of virtual markers on the offshore structure corresponding to the identified structural members or parts thereof.

6. The method according to any of claims 1-5, further comprising:
- displaying in real time a representation of the computed position of the structure (10) on a display at the vessel, and
- overlaying the representation of the computed position of the structure onto a representation of a desired position (10') of the structure to allow an operator of the crane (3) to perform crane adjustments to correct the position of the structure (10) before the structure is secured to the seafloor or to the existing subsea infrastructure.

7. The method according to any of claims 1-6, further comprising moving the structure (10) on the basis of the computed position of the structure in order to approach it to said predetermined installation position of the structure.

8. The method according to claim 7, further comprising fixing the structure (10) at a position that corresponds to said predetermined installation position of the structure on the seafloor or on the existing subsea infrastructure.

9. The method according to any of the claims 1-8, wherein the imaging device (20) is located at a first location and a display (26) is located at a second location and the representation of the position of the structure on the display (26) is a representation as viewed from the second location.

10. A computer program product comprising instructions to perform the method according to any of claims 1-9, when installed on a computer or processing device (24).

11. The computer program product according to claim 10, comprising:
- an image acquisition software module for acquiring time-stamped image data;
- a position software module for acquiring time-stamped position data;
- a marker identification module for identifying individual markers within the image;
- a marker tracking module for actively tracking an identified marker;
- an image reconstruction module for transforming the image from the moving frame into the fixed frame of reference, and
- a GUI module for presenting a display of the structure in the fixed frame of reference.

12. The computer program product according to claim 10 or 11, further comprising a model importation module to import a computer representation of the structure (10); and a structure recognition module which detects structure within the image data based on the computer representation imported by the model importation module.

13. A system (1) for determining in real time the position with six degrees of freedom of an offshore structure (10), for example an offshore jacket, in a fixed reference frame, for example the Earth's reference frame, by observations from a moving reference frame while the structure is being placed at a predetermined installation position with six degrees of freedom on a seafloor or on an existing subsea infrastructure using a crane (3) on a vessel (2), comprising
- a plurality of markers (12) located at defined positions on the structure such that they are visible from a viewing direction and provide position information of the structure with six degrees of freedom by viewing said markers, and;
- an imaging device (20) for viewing the markers and generating image data representative of the relative positions of the markers in the moving reference frame;
- a local positioning system (22, 23), arranged to determine an instantaneous position with six degrees of freedom of the imaging device in the fixed reference frame and generate imaging device position data synchronized with said image data;
- a processing unit (24) storing predetermined survey information as to the defined positions of the markers in relation to the geometry of the structure, and arranged to receive the image data from the imaging device and the imaging device position data from the local positioning system and compute the position of the offshore structure in the fixed reference frame with six degrees of freedom by using said predetermined survey information as to the defined positions of the markers, as well as the marker positions of the markers as derived from the image data, and the imaging device position data.

14. The system (1) according to claim 13, wherein at least four markers (12a-12F) are affixed to the structure (10) for the purpose of the position determination, which are located in a 3D space and preferably affixed to the structure in a removable manner.

15. The system (1) according to claim 13 or 14, wherein the system is arranged to correlate the measurement times for the generated image data and the imaging device position data, involving issuing clock signals to synchronise capture triggering times for the image data and the position data, and/or involving timestamping the image data and the imaging device position data to a same clock signal with an accuracy of, preferably, at least 10 ms, more preferably at least 1 ms;
said clock signals being, preferably, linked to a GNSS timebase.

16. The system (1) according to any of the claims 13, 14 or 15, further comprising a display (26), operatively connected to the processing unit (24), and arranged to display said representation of the computed position of the structure (10) on the display, wherein the imaging device (20) is located at a first location and the display (26) is located at a second location and the representation of the position of the structure (10) on the display is a representation as viewed from the second location.

17. The system according to claim 16, wherein said processing unit is configured to overlay the representation of the computed position of the structure onto a representation of a desired position (10') of the structure on the display.

18. The system (1) according to any of the claims 13-17, wherein the system comprises said vessel (2) and the imaging device (20) is mounted onboard said vessel (2) or the system comprises an unmanned vehicle (250) and the imaging device (20) is mounted on said unmanned vehicle (250).

19. The system (1) according to any of the claims 13-18, further comprising said vessel (2) and said crane (3) configured to place the structure (10) at said predetermined installation position with six degrees of freedom on a seafloor or on an existing subsea infrastructure as controlled by a crane operator.

## Patentansprüche

1. Verfahren zum in Echtzeit erfolgenden Bestimmen einer sechs Freiheitsgrade aufweisenden Position einer Offshore-Struktur (10), beispielsweise eines Offshore-Jackets, wobei die Struktur an einer sechs Freiheitsgrade aufweisenden vorbestimmten Installationsposition an einem Meeresboden oder an einer bestehenden Unterseeinfrastruktur unter Verwendung eines Krans (3) auf einem Schiff (2) platziert wird, wobei die Position der Struktur in einem festen Referenzrahmen, beispielsweise dem Erdreferenzrahmen, durch Beobachtungen der Struktur von einem sich bewegenden Referenzrahmen aus bestimmt wird, wobei die Struktur mehrere Markierungen (12) umfasst, die derart an der Struktur positioniert sind, dass sie aus einer Betrachtungsrichtung sichtbar sind, und Information über die sechs Freiheitsgrade aufweisende Position der Struktur durch Betrachten der Markierungen bereitstellen, wobei das Verfahren umfasst:
anfängliches Vermessen der Struktur beispielsweise an Land mit einem Bestimmen der Positionen der mehreren Markierungen in Bezug auf einen Referenzrahmen der Struktur und einem Speichern von Vermessungsinformation hinsichtlich der bestimmten Positionen der Markierungen in einer Beziehung zur Geometrie der Struktur;
nach dem Vermessen und während des Absenkens und Platzierens der Struktur (10) an der vorbestimmten Installationsposition durch den Kran (3) erfolgendes
Betrachten der Struktur mit einer Bildgebervorrichtung (20) von dem sich bewegenden Referenzrahmen aus zur Erzeugung von Bilddaten zur Darstellung der relativen Markierungspositionen der Markierungen in dem sich bewegenden Referenzrah men;
Bestimmen einer sechs Freiheitsgrade aufweisenden Momentanposition der Bildgebervorrichtung in dem festen Referenzrahmen und Erzeugen von Bildgebervorrichtungspositionsdaten, die mit den Bilddaten synchronisiert sind, und Verarbeiten der synchronisierten Bilddaten und der Bildgebervorrichtungspositionsdaten zur Berechnung der Position der Offshore-Struktur in dem sechs Freiheitsgrade aufweisenden festen Referenzrahmen durch Verwenden der Vermessungsinformation hinsichtlich der bestimmten Positionen der Markierungen wie auch der Markierungspositionen der Markierungen gemäß Herleitung aus den Bilddaten und der Bildgebervorrichtungspositionsdaten.

2. Verfahren nach Anspruch 1, des Weiteren umfassend:
Anbringen der mehreren Markierungen (12A bis 12F) an der Struktur (10) und Vermessen der Struktur zur Bestimmung und Speicherung der Positionen der Markierungen in dem Referenzrahmen der Struktur vor dem Betrachten der Struktur von dem sich bewegenden Referenzrahmen aus.

3. Verfahren nach Anspruch 1 oder 2, wobei die Bildgebervorrichtung (20) Teil einer Vermessungseinheit (4) ist, die eine integrierte Inertialüberwachungseinheit IMU (Inertial Monitoring Unit) (22) beinhaltet, wobei das Bestimmen einer Momentanposition der Bildgebervorrichtung (20) in dem festen Referenzrahmen unter Verwendung der IMU erfolgt.

4. Verfahren nach einem der Ansprüche 1 bis 3, des Weiteren umfassend:
Korrelieren der Messzeiten für die erzeugten Bilddaten und die Bildgebervorrichtungspositionsdaten mit einem Ausgeben von Taktsignalen zur Synchronisierung von Erfassungsauslösezeiten für die Bilddaten und die Positionsdaten und/oder mit einem Zeitstempeln der Bilddaten und der Bildgebervorrichtungspositionsdaten auf ein selbes Taktsignal mit einer Genauigkeit von bevorzugt wenigstens 10 ms, besonders bevorzugt wenigstens 1 ms;
wobei die Taktsignale bevorzugt mit einer GNSS-Zeitbasis verknüpft sind.

5. Verfahren nach einem der Ansprüche 1 bis 4, umfassend:
Zugreifen auf eine elektronische Datei oder eine andere Computerdarstellung der Struktur (10), die die Abmessungen und den mechanischen Aufbau der Struktur beschreibt;
Identifizieren von strukturellen Elementen oder Teilen der Struktur durch visuelle Prüfung der Offshore-Struktur mit der Bildgebervorrichtung und in der elektronischen Datei, und
Positionieren von virtuellen Markierungen an der Offshore-Struktur entsprechend den identifizierten strukturellen Elementen oder Teilen hiervon.

6. Verfahren nach einem der Ansprüche 1 bis 5, des Weiteren umfassend:
in Echtzeit erfolgendes Anzeigen einer Darstellung der berechneten Position der Struktur (10) auf einer Anzeige auf dem Schiff, und
Einblenden der Darstellung der berechneten Position der Struktur auf einer Darstellung einer gewünschten Position (10') der Struktur, um einem Bediener des Krans (3) zu ermöglichen, Krannachjustierungen zur Korrektur der Position der Struktur (10) vorzunehmen, bevor die Struktur am Meeresboden oder an der bestehenden Unterseeinfrastruktur gesichert wird.

7. Verfahren nach einem der Ansprüche 1 bis 6, des Weiteren umfassend:
Bewegen der Struktur (10) auf Grundlage der berechneten Position der Struktur zur Annäherung derselben an die vorbestimmte Installationsposition der Struktur.

8. Verfahren nach Anspruch 7, des Weiteren umfassend:
Fixieren der Struktur (10) an einer Position entsprechend der vorbestimmten Installationsposition der Struktur am Meeresboden oder an der bestehenden Unterseeinfrastruktur.

9. Verfahren nach einem der Ansprüche 1 bis 8, wobei die Bildgebervorrichtung (20) an einer ersten Stelle befindlich ist und eine Anzeige (26) an einer zweiten Stelle befindlich ist und wobei die Darstellung der Position der Struktur auf der Anzeige (26) eine Darstellung gemäß Betrachtung von der zweiten Stelle aus ist.

10. Computerprogrammerzeugnis, das Anweisungen umfasst, die bei Installation auf einem Computer oder einer Verarbeitungsvorrichtung (24) das Verfahren nach einem der Ansprüche 1 bis 9 durchführen.

11. Computerprogrammerzeugnis nach Anspruch 10, umfassend:
ein Bilderfassungssoftwaremodul zum Erfassen von zeitgestempelten Bilddaten;
ein Positionssoftwaremodul zum Erfassen von zeitgestempelten Positionsdaten;
ein Markierungsidentifizierungsmodul zum Identifizieren von individuellen Markierungen innerhalb des Bildes;
ein Markierungsnachverfolgungsmodul zum aktiven Nachverfolgen einer identifizierten Markierung;
ein Bildrekonstruktionsmodul zum Überführen des Bildes von dem sich bewegenden Rahmen in den festen Referenzrahmen, und
ein GUI-Modul zum Präsentieren einer Anzeige der Struktur in dem festen Referenzrahmen.

12. Computerprogrammerzeugnis nach Anspruch 10 oder 11, des Weiteren umfassend:
ein Modellimportiermodul zum Importieren einer Computerdarstellung der Struktur (10); und
ein Strukturerkennungsmodul zum Detektieren einer Struktur innerhalb der Bilddaten auf Grundlage der durch das Modellimportiermodul importierten Computerdarstellung.

13. System (1) zum in Echtzeit erfolgenden Bestimmen der sechs Freiheitsgrade aufweisenden Position einer Offshore-Struktur (10), beispielsweise eines Offshore-Jackets, in einem festen Referenzrahmen, beispielsweise dem Erdreferenzrahmen, durch Beobachtungen von einem sich bewegenden Referenzrahmen aus, während die Struktur an einer sechs Freiheitsgrade aufweisenden vorbestimmten Installationsposition an einem Meeresboden oder an einer bestehenden Unterseeinfrastruktur unter Verwendung eines Krans (3) auf einem Schiff (2) platziert wird, umfassend:
mehrere Markierungen (12), die derart an definierten Positionen an der Struktur befindlich sind, dass sie aus einer Betrachtungsrichtung sichtbar sind, und Information über die sechs Freiheitsgrade aufweisende Position der Struktur durch Betrachten der Markierungen bereitstellen; und
eine Bildgebervorrichtung (20) zum Betrachten der Markierungen und Erzeugen von Bilddaten zur Darstellung der Relativpositionen der Markierungen in dem sich bewegenden Referenzrahmen;
ein Ortspositioniersystem (22, 23) mit Anordnung zum Bestimmen einer sechs Freiheitsgrade aufweisenden Momentanposition der Bildgebervorrichtung in dem festen Referenzrahmen und Erzeugen von Bildgebervorrichtungspositionsdaten, die mit den Bilddaten synchronisiert sind;
eine Verarbeitungseinheit (24) zum Speichern von vorbestimmter Vermessungsinformation hinsichtlich der definierten Positionen der Markierungen in einer Beziehung zur Geometrie der Struktur und in einer Anordnung zum Empfangen der Bilddaten von der Bildgebervorrichtung und der Bildgebervorrichtungspositionsdaten von dem Ortspositioniersystem und Berechnen der Position der Offshore-Struktur in dem sechs Freiheitsgrade aufweisenden festen Referenzrahmen durch Verwenden der vorbestimmten Vermessungsinformation hinsichtlich der definierten Positionen der Markierungen wie auch der Markierungspositionen der Markierungen gemäß Herleitung aus den Bilddaten und der Bildgebervorrichtungspositionsdaten.

14. System (1) nach Anspruch 13, wobei zum Zwecke der Positionsbestimmung an der Struktur (10) wenigstens vier Markierungen (12a bis 12F) angebracht werden, die in einem dreidimensionalen Raum befindlich sind und bevorzugt wiederabnehmbar an der Struktur angebracht sind.

15. System (1) nach Anspruch 13 oder 14, wobei das System angeordnet ist zum Korrelieren der Messzeiten für die erzeugten Bilddaten und die Bildgebervorrichtungspositionsdaten mit einem Ausgeben von Taktsignalen zur Synchronisierung von Erfassungsauslösezeiten für die Bilddaten und die Positionsdaten und/oder mit einem Zeitstempeln der Bilddaten und der Bildgebervorrichtungspositionsdaten auf ein selbes Taktsignal mit einer Genauigkeit von bevorzugt wenigstens 10 ms, besonders bevorzugt wenigstens 1 ms; wobei die Taktsignale bevorzugt mit einer GNSS-Zeitbasis verknüpft sind.

16. System (1) nach einem der Ansprüche 13, 14 oder 15, des Weiteren umfassend:
eine Anzeige (26), die funktionell mit der Verarbeitungseinheit (24) verbunden ist und zum Anzeigen der Darstellung der berechneten Position der Struktur (10) auf der Anzeige angeordnet ist, wobei die Bildgebervorrichtung (20) an einer ersten Stelle angeordnet ist und die Anzeige (26) an einer zweiten Stelle angeordnet ist, wobei die Darstellung der Position der Struktur (10) auf der Anzeige eine Darstellung gemäß Betrachtung von der zweiten Stelle aus ist.

17. System nach Anspruch 16, wobei die Verarbeitungseinheit zum Einblenden der Darstellung der berechneten Position der Struktur auf einer Darstellung einer gewünschten Position (10') der Struktur auf der Anzeige konfiguriert ist.

18. System (1) nach einem der Ansprüche 13 bis 17, wobei das System das Schiff (2) umfasst und die Bildgebervorrichtung (20) an Bord des Schiffes (2) montiert ist oder wobei das System ein unbemanntes Fahrzeug (250) umfasst und die Bildgebervorrichtung (20) an dem unbemannten Fahrzeug (250) montiert ist.

19. System (1) nach einem der Ansprüche 13 bis 18, des Weiteren umfassend das Schiff (2) und den Kran (3) mit einer Konfigurierung zum Platzieren der Struktur (10) an der sechs Freiheitsgrade aufweisenden vorbestimmten Installationsposition an einem Meeresboden oder einer bestehenden Unterseeinfrastruktur gemäß Steuerung durch einen Kranbediener.

## Revendications

1. Procédé pour déterminer en temps réel une position avec six degrés de liberté d'une structure offshore (10), par exemple d'une fondation offshore de type jacket, tandis que la structure est placée dans une position d'installation prédéterminée avec six degrés de liberté sur un fond marinou sur une infrastructure sous-marine existante à l'aide d'une grue (3) sur un navire (2), la position de la structure étant déterminée dans un cadre de référence fixe, par exemple le cadre de référence terrestre, par des observations de la structure à partir d'un cadre de référence mobile, la structure comportant une pluralité de repères (12) positionnés sur la structure de telle sorte qu'ils sont visibles depuis une direction de visualisation et fournissent des informations de position de la structure avec six degrés de liberté en regardant lesdits repères, le procédé comprenant les étapes consistant à :
- initialement faire un levé de la structure, par exemple sur la terre ferme, y compris déterminer les positions de la pluralité de repères par rapport à un cadre de référence de la structure et stocker des informations de levé concernant les positions déterminées des repères par rapport à la géométrie de la structure ;
- après le levé, et pendant l'abaissement et la mise en place de la structure (10) sur ladite position d'installation prédéterminée par la grue (3) :
- visualiser la structure à l'aide d'un dispositif d'imagerie (20) depuis le cadre de référence mobile, pour générer des données d'image représentatives des positions relatives des repères dans le cadre de référence mobile ;
- déterminer une position instantanée avec six degrés de liberté du dispositif d'imagerie dans le cadre de référence fixe et générer des données de position de dispositif d'imagerie synchronisées avec lesdites données d'image, et
- traiter les données d'image synchronisées et les données de position de dispositif d'imagerie pour calculer la position de la structure offshore dans le cadre de référence fixe avec six degrés de liberté en utilisant lesdites informations de levé quant aux positions déterminées des repères, ainsi que les positions de repères des repères telles que dérivées des données d'image, et des données de position du dispositif d'imagerie.

2. Procédé de la revendication 1, comprenant en outre l'étape consistant à fixer la pluralité de repères (12A-12F) sur la structure (10) et à faire le levé de la structure pour déterminer et stocker les positions des repères dans le cadre de référence de la structure avant de visualiser la structure depuis le cadre de référence mobile.

3. Procédé de la revendication 1 ou 2, dans lequel le dispositif d'imagerie (20) fait partie d'une unité de levé (4) qui comprend une unité de surveillance inertielle intégrée, IMU, (22), et dans lequel la détermination d'une position instantanée du dispositif d'imagerie (20) dans le cadre de référence fixe se fait en utilisant l'IMU.

4. Procédé selon l'une quelconque des revendications 1 à 3, comprenant en outre l'étape consistant à mettre en corrélation les temps de mesure pour les données d'image générées et les données de position de dispositif d'imagerie, impliquant l'émission des signaux d'horloge pour synchroniser des temps de déclenchement de capture pour les données d'image et les données de position, et/ou impliquant un horodatage des données d'image et des données de position de dispositif d'imagerie par rapport à un même signal d'horloge avec une précision de préférence d'au moins 10 ms, de manière plus préférée d'au moins 1 ms ;
lesdits signaux d'horloge étant de préférence liés à une base de temps GNSS.

5. Procédé selon l'une quelconque des revendications 1 à 4, comprenant les étapes consistant à :
- accéder à un fichier électronique ou à une autre représentation informatique de la structure (10), qui décrit les dimensions et la configuration mécanique de la structure ;
- identifier des éléments structurels ou des parties de la structure, par inspection virtuelle de la structure offshore à l'aide du dispositif d'imagerie et dans le fichier électronique, et
- positionner des repères virtuels sur la structure offshore correspondant aux éléments structurels identifiés ou à des parties de ceux-ci.

6. Procédé selon l'une quelconque des revendications 1 à 5, comprenant en outre les étapes consistant à :
- afficher en temps réel une représentation de la position calculée de la structure (10) sur un affichage sur le navire, et
- superposer la représentation de la position calculée de la structure sur une représentation d'une position souhaitée (10') de la structure pour permettre à un opérateur de la grue (3) d'effectuer des ajustements de grue pour corriger la position de la structure (10) avant que la structure soit fixée au fond marin ou à l'infrastructure sous-marine existante.

7. Procédé selon l'une quelconque des revendications 1 à 6, comprenant en outre le déplacement de la structure (10) sur la base de la position calculée de la structure afin de l'approcher de ladite position d'installation prédéterminée de la structure.

8. Procédé selon la revendication 7, comprenant en outre une fixation de la structure (10) dans une position qui correspond à ladite position d'installation prédéterminée de la structure sur le fond marin ou sur l'infrastructure sous-marine existante.

9. Procédé selon l'une quelconque des revendications 1 à 8, dans lequel le dispositif d'imagerie (20) est situé dans un premier emplacement et un affichage (26) est situé dans un second emplacement, et la représentation de la position de la structure sur l'affichage (26) est une représentation telle que vue depuis le second emplacement.

10. Produit de programme informatique comprenant des instructions pour exécuter le procédé selon l'une quelconque des revendications 1 à 9, lorsqu'il est installé sur un ordinateur ou un dispositif de traitement (24).

11. Produit de programme informatique selon la revendication 10, comprenant :
- un module logiciel d'acquisition d'image permettant d'acquérir des données d'image horodatées ;
- un module logiciel de position permettant d'acquérir des données de position horodatées ;
- un module d'identification de repère permettant d'identifier des repères individuels dans l'image ;
- un module de suivi de repère permettant de suivre activement un repère identifié ;
- un module de reconstruction d'image permettant de transformer l'image depuis le cadre mobile dans le cadre de référence fixe, et
- un module GUI permettant de présenter un affichage de la structure dans le cadre de référence fixe.

12. Produit de programme informatique selon la revendication 10 ou 11, comprenant en outre un module d'importation de modèle permettant d'importer une représentation informatique de la structure (10) ; et un module de reconnaissance de structure qui détecte une structure dans les données d'image sur la base de la représentation informatique importée par le module d'importation de modèle.

13. Système (1) permettant de déterminer en temps réel la position avec six degrés de liberté d'une structure offshore (10), par exemple d'une fondation offshore de type jacket, dans un cadre de référence fixe, par exemple le cadre de référence terrestre, par des observations à partir d'un cadre de référence mobile pendant que la structure est placée dans une position d'installation prédéterminée avec six degrés de liberté sur un fond marin ou sur une infrastructure sous-marine existante à l'aide d'une grue (3) sur un navire (2), comprenant
- une pluralité de repères (12) situés dans des positions définies sur la structure de telle sorte qu'ils sont visibles depuis une direction de visualisation et fournissent des informations de position de la structure avec six degrés de liberté en visualisant lesdits repères, et ;
- un dispositif d'imagerie (20) permettant de visualiser les repères et de générer des données d'image représentatives des positions relatives des repères dans le cadre de référence mobile ;
- un système de positionnement local (22, 23), agencé pour déterminer une position instantanée avec six degrés de liberté du dispositif d'imagerie dans le cadre de référence fixe et de générer des données de position de dispositif d'imagerie synchronisées avec lesdites données d'image ;
- une unité de traitement (24) stockant des informations de levé prédéterminées concernant les positions définies des repères par rapport à la géométrie de la structure, et agencée pour recevoir les données d'image à partir du dispositif d'imagerie et les données de position de dispositif d'imagerie à partir du système de positionnement local, et pour calculer la position de la structure offshore dans le cadre de référence fixe avec six degrés de liberté en utilisant lesdites informations de levé prédéterminées quant aux positions définies des repères, ainsi que les positions de repère des repères telles que dérivées des données d'image, et les données de position du dispositif d'imagerie.

14. Système (1) selon la revendication 13, dans lequel au moins quatre repères (12a-12F) sont fixés à la structure (10) à des fins de détermination de la position, qui sont situés dans un espace 3D et de préférence fixés à la structure de manière amovible.

15. Système (1) selon la revendication 13 ou 14, dans lequel le système est agencé pour mettre en corrélation les temps de mesure pour les données d'image générées et les données de position de dispositif d'imagerie, impliquant l'émission de signaux d'horloge pour synchroniser les temps de déclenchement de capture pour les données d'image et les données de position, et/ou impliquant un horodatage des données d'image et des données de position du dispositif d'imagerie par rapport à un même signal d'horloge avec une précision de préférence d'au moins 10 ms, de façon plus préférentielle d'au moins 1 ms ;
ledit signal d'horloge étant de préférence lié à une base de temps GNSS.

16. Système (1) selon l'une quelconque des revendications 13, 14 ou 15, comprenant en outre un affichage (26), connecté de manière fonctionnelle à l'unité de traitement (24) et agencé pour afficher ladite représentation de la position calculée de la structure (10) sur l'affichage, dans lequel le dispositif d'imagerie (20) est situé dans un premier emplacement et l'affichage (26) est situé dans un second emplacement, et la représentation de la position de la structure (10) sur l'affichage est une représentation telle que vue depuis le second emplacement.

17. Système selon la revendication 16, dans lequel ladite unité de traitement est configurée pour superposer la représentation de la position calculée de la structure sur une représentation d'une position souhaitée (10') de la structure sur l'affichage.

18. Système (1) selon l'une quelconque des revendications 13 à 17, dans lequel le système comprend ledit navire (2), et le dispositif d'imagerie (20) est monté à bord dudit navire (2) ou le système comprend un véhicule sans pilote (250) et le dispositif d'imagerie (20) est monté sur ledit véhicule sans pilote (250).

19. Système (1) selon l'une quelconque des revendications 13 à 18, comprenant en outre ledit navire (2) et ladite grue (3) configurée pour placer la structure (10) dans ladite position d'installation prédéterminée avec six degrés de liberté sur un fond marin ou sur une infrastructure sous-marine existante commandée par un opérateur de grue.
